# EUROPÄISCHE PATENTSCHRIFT

(11) **EP 1 287 282 B1**
(45) Veröffentlichungstag und Bekanntmachung des Hinweises auf die Patenterteilung: **10.11.2004**
(21) Anmeldenummer: 01919168.3
(22) Anmeldetag: 03.03.2001
(51) Int. Cl.: F16L 19/10

(54) **SCHRAUBVERBINDUNG**
SCREW CONNECTION
RACCORD A VIS

(30) Priorität: 07.03.2000 DE 10011146
(43) Veröffentlichungstag der Anmeldung: 05.03.2003
(73) Patentinhaber: Parker Hannifin GmbH, 33652 Bielefeld (DE)
(72) Erfinder: UDHÖFER, Andreas, 33334 Gütersloh (DE)
(74) Vertreter: Müller, Karl-Ernst, Dr., Dipl.-Ing.
(86) Internationale Anmeldenummer: PCT/DE2001/000841
(87) Internationale Veröffentlichungsnummer: WO 2001/066989

(56) Entgegenhaltungen:
- WO-A-93/25837
- DE-A- 3 341 726
- DE-A- 4 229 502
- GB-A- 1 340 473

## Beschreibung

Die Erfindung betrifft eine Schraubverbindung mit einem Dichtungsring, einem Anschlußstück und einer Überwurfmutter zur Herstellung einer Rohrverbindung, wobei der Dichtungsring als Schneidring mit einer oder mehreren Schneiden ausgebildet ist, welcher in eine von einer Stirnfläche ausgehenden konischen Bohrung des Anschlußstückes durch Aufschrauben der Überwurfmutter auf das Anschlußstück einbringbar ist, und der Dichtungsring auf seiner Außenseite mutterseitig eine Ringverstärkung aufweist, welche an ihrem Übergang zum schmalen Ringteil eine Ringfläche bildet, die eine Neigung zur Rohrachse zwischen 45° und 90° aufweist. Eine solche Schraubverbindung ist der GB-A-1 340 473 zu entnehmen.

Schneidringverschraubungen, bei denen der verwendete Schneidring mehrere axial hintereinander angeordnete Schneiden aufweist, sind beispielsweise aus der WO93/25837-A bekannt. Hieraus geht auch hervor, den Schneidring auf einem Teil seiner axialen Länge am mutterseitigen Ende mit einer radial nach außen gerichteten Verstärkung zu versehen. Bei der Montage wird der Schneidring-Bereich durch Betätigung der Aufschraubmutter in den Konus des Anschlußstückes gepreßt, wodurch eine Umlenkung der Schneiden zum Rohrmantel und ein Einschneiden in den Mantel erfolgt. Die mutterseitige Ringverstärkung bewirkt eine Begrenzung des Umlenkbereichs und damit eine Stabilisierung des Schneidringes.

Aus der DE 33 41 726 ist eine Schraubverbindung mit einem Schneidring bekannt, welcher mit einer über den Umfang verteilten als Rippen ausgebildeten Verstärkung versehen ist. Die Rippen weisen radial nach außen und verlaufen axial. Sie sind an ihrem der Mutter zugewandten Ende mit einer zu der kegeligen Bohrung der Mutter angepaßten Anschlagfläche versehen. Mit ihrem anderen Ende bilden sie eine Anschlagfläche mit der Stirnfläche des Anschlußstückes. Erreichen die genannten Anschlagflächen ihre jeweiligen Gegenflächen, steigt das vom Monteur aufzubringende Drehmoment steil an, wodurch sich das Ende der Montage anzeigt.

Die Montageanleitung für Schneidringverschraubungen nach DIN 3859-Teil 2 schreibt vor, daß die Verbindung nach handfestem Verschrauben mit 1 1/2 Umdrehungen der Überwurfmutter zu montieren ist (Vollmontage). Nach einer Demontage ist jedoch nicht mehr objektiv erkennbar, ob diese Anweisung korrekt durchgeführt wurde. Nach der Montageanleitung wird eine optische Beurteilung des durch die Schneiden bewirkten Bundaufwurfs durchgeführt. Eine solche Beurteilung ist jedoch stets subjektiv und von der Erfahrung des Monteurs abhängig. An den Anschlagflächen und dem Bundaufwurf auf dem Rohrmantel ist der durchgeführte Montagevorgang nicht verifizierbar. Selbst eine durchgeführte Übermontage läßt sich durch Betrachtung der Anschlagflächen und des Bundaufwurfs nicht einwandfrei erkennen.

Der Erfindung liegt daher die Aufgabe zugrunde Mittel anzugeben, mit deren Hilfe die Güte einer durchgeführten Montage objektiv erkennbar und durch Demontage des Systems jederzeit nachweisbar ist.

Die Lösung dieser Aufgabe besteht nach der Erfindung in einer Schraubverbindung nach Anspruch 1 bzw. nach Anspruch 7.

Nach der Erfindung weisen die Übertragungselemente räumlich ausgebildete Konturen auf, deren negative Abbildung auf die Stirnfläche des Anschlußstückes übertragbar ist.

Ähnlich einem Prägestempel wird das Negativbild durch die vom Monteur ausgeübte Preßkraft in die Stirnfläche des Anschlußstückes gepreßt. Dieser Vorgang wird dadurch begünstigt, daß die Oberfläche des Schneidringes gehärtet ist, so daß demgegenüber die Stirnfläche des Anschlußstückes eine geringere Härte aufweist, so daß der Prägevorgang erleichtert wird.

In einer vereinfachten Ausführungsform sind die Übertragungselemente geriffelt ausgebildet. Ein solches Prägemuster läßt sich leicht herstellen, ist optisch gut erkennbar und läßt sich bei schlechten Sichtverhältnissen auch sicher erfühlen.

Die Übertragungselemente sind in einer weiteren Abwandlung der Erfindung als Firmenkennzeichen ausgebildet.

In einer weiteren Ausführungsform der Erfindung sind die Übertragungselemente als Farbstoffpigmente ausgebildet. Durch das Auflaufen der Ringfläche des Schneidringes auf die Stirnfläche des Anschlußstückes bei der Erstmontage steigt das Monatagedrehmoment steil an und überträgt die Übertragungselemente auf die Stirnfläche des Anschlußstückes. Der steile Anstieg des Montagedrehmoments ist für den Monteur das Signal, daß die Montage erfolgreich beendet ist. Gleichzeitig läßt sich an der Stirnfläche des Anschlußstückes bei der Demontage der erreichte Montagezustand objektiv überprüfen, da bei einer vorschriftsmäßigen Erstmontage entsprechende Prägungen oder Farbkennungen vorhanden sein müssen.

In einer Abwandlung der Erfindung lassen sich die Übertragungsmittel auch dazu verwenden, eine Übermontage des Systems nachzuweisen. Hierbei weist die axiale Länge L₁ der Ringverstärkung eine solche Größe auf, daß auf der Ringfläche angeordnete Übertragungselemente erst bei einer Übermontage ihre negative Abbildung oder sich selbst auf die Stirnfläche des Anschlußstückes übertragen. Bei dieser Ausführungsform ist daher die axiale Länge der Ringverstärkung L₁ kürzer ausgebildet. Bei einer Vollmontage und der nach DIN vorgeschriebenen 1 1/2 fachen Umdrehung der Überwurfmutter erfolgt daher keine Berührung der Ringfläche des Schneidringes mit der Stirnfläche des Anschlußstückes, sondern erst bei einer Übermontage, d.h. bei ca. 1 3/4 Umdrehungen der Überwurfmutter. Die verkürzte Ringverstärkung L₁ zeigt bei einer korrekten Montage eine relativ geringe Steifheit, wodurch Schwingungsübertragungen gedämpft werden, ähnlich der Wirkung metallischer Federn.

Die Erfindung wird anhand der Zeichnungen näher erläutert. Hierbei zeigen:
- Figur 1: einen Halbschnitt eines Schneidringes nach der Erfindung;
- Figur 2: eine Explosionsdarstellung aller Teile einer Schraubverbindung im Halb- und Vollschnitt nach der Erfindung;
- Figur 3: einen Halbschnitt einer korrekt montierten Schraubverbindung nach einer ersten Variante der Erfindung;
- Figur 4: einen Halbschnitt einer korrekt montierten Schraubverbindung nach einer zweiten Variante der Erfindung;
- Figur 5: einen Halbschnitt einer übermontierten Schraubverbindung nach einer zweiten Variante der Erfindung;
- Figur 6a und 6b: eine Seitenansicht a und ein Längsschnitt b eines Anschlußstückes mit einer Markierung,
1. bei einer verkürzten Ringverstärung L₁ nach einer Übermontage und
2. bei einer verlängerten Ringverstärkung L₁ bei Normalmontage;

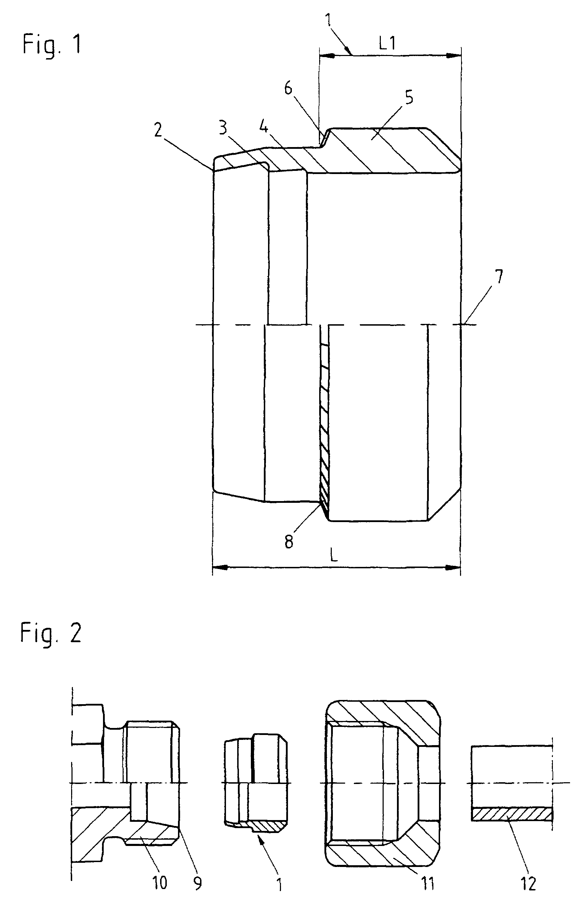

Die Figur 1 zeigt einen Längsteilschnitt und eine Teilansicht eines Schneidringes 1 nach der Erfindung. Dieser weist die Schneiden 2 und 3 und die Schneide oder Stoppkante 4 mit unterschiedlichen Radien auf. Auf seiner Außenseite ist mutterseitig eine Ringverstärkung 5 vorgesehen, welche an ihrem Übergang zum schmalen Ringteil eine Ringfläche 6 bildet. Die Ringfläche 6 weist eine Neigung zur Rohrachse 7 auf, welche zwischen 45° und 90° liegt. Die axiale Länge L₁ der Ringverstärkung weist in der einen Ausführungsform der Erfindung eine solche Größe auf, daß die auf der Ringfläche 6 angeordneten Übertragungselemente 8 bei einer Vollmontage ihre negative Abbildung oder sich selbst auf die Stirnfläche 9 des Anschlußstückes 10 übertragen.

Hierzu wird auf Figur 2 verwiesen, welche eine Explosionsdarstellung aller Teile einer Schraubverbindung im Längsteilschnitt und in einer Teilansicht nach der Erfindung wiedergibt. Hierbei zeigen 10 das Anschlußstück, 1 den Schneidring, 11 die Überwurfmutter und 12 das zu verbindende Rohr.

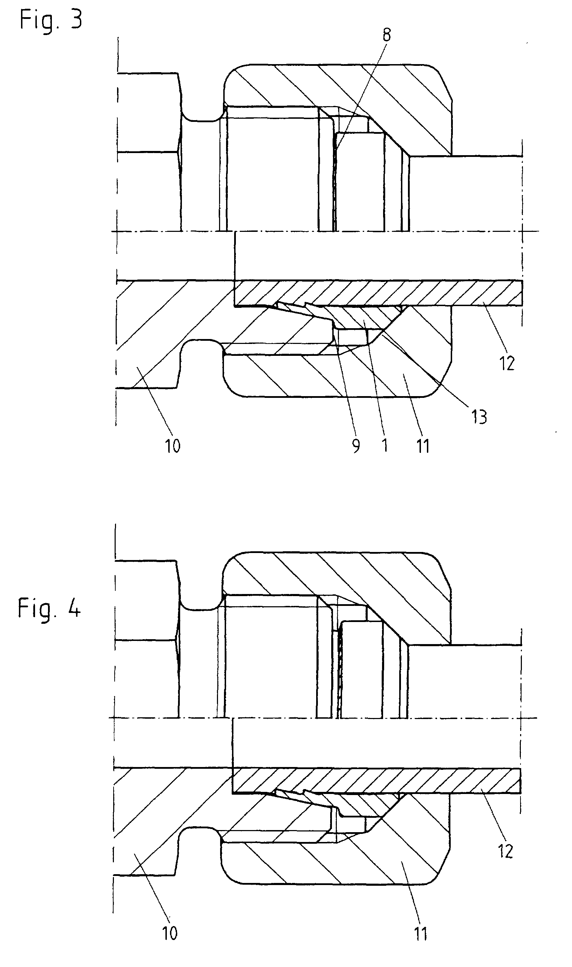

Die Figur 3 zeigt diese Elemente im korrekt montierten Zustand. Nach einem handfesten Anzug erfolgt eine 1 1/2 Umdrehung der Überwurfmutter 11, welche mit ihrer konischen Innenfläche 13 auf die entsprechend ausgebildete Schrägfläche des Schneidrings 1 einwirkt und mit dessen Ringfläche 6 gegen die Stirnfläche 9 des Anschlußstückes 10 anschlägt. Hierdurch werden die Übertragungselemente 8 in die weichere Stirnfläche 9 des Anschlußstückes gepreßt und bewirken eine negative Abbildung derselben. Wird die Schraubverbindung demontiert, so zeugt das Abbild auf der Stirnfläche 9 davon, daß die Schraubverbindung korrekt montiert war.

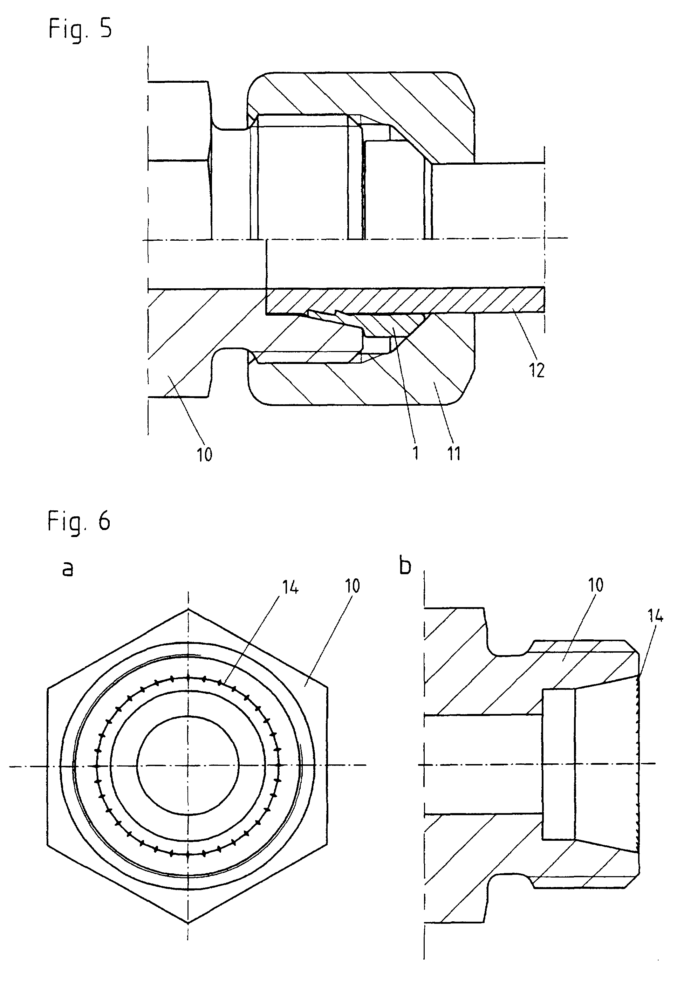

Die Figur 4 zeigt eine zweite Ausführungsform der Erfindung. Hierbei wird nicht der korrekte Montagezustand einer Kennzeichnung und damit einer Überprüfung durch eine Prägung auf der Stirnfläche 9 des Anschlußstückes 10 erreicht, sondern eine Übermontage. Hierfür wird bei gleicher Achslänge L des Schneidringes 1 die Länge L₁ der Ringverstärkung derartig verkürzt, daß bei einer korrekten Montage der Rohrverbindung die Ringfläche 6 mit ihren Konturen oder Übertragungselementen 8 die Stirnfläche 9 des Anschlußstückes 10 nicht berührt, wodurch keine Prägung bewirkt wird. Erst bei einer Übermontage, d.h. bei einer Umdrehung der Überwurfmutter von ca. 1 3/4 Mal wird eine Preßwirkung von der Ringfläche 6 auf die Stirnfläche 9 des Anschlußstückes 10 ausgeübt, wodurch eine Prägung der Stirnfläche und damit eine Kennzeichnung der erfolgten Übermontage erreicht wird. Dieser Zustand ist in Figur 5 wiedergegeben.

Die Figuren 6a und 6b zeigen eine beispielhafte Darstellung der Markierung der Stirnflächenkante 14 des Anschlußstückes 10 zur Kennzeichnung
1. einer Übermontage bei einer verkürzten Ringverstärkung L₁ und
2. einer Normalmontage bei einer verlängerten Ringverstärkung L₁;

### Kennzeichnungsliste der Elemente

- 1: Schneidring
- 2: Schneide
- 3: Schneide
- 4: Schneide oder Stoppkante
- 5: Ringverstärkung
- 6: Ringfläche
- 7: Rohrachse
- 8: Übertragungselement
- 9: Stirnfläche des Anschlußstückes
- 10: Anschlußstück
- 11: Überwurfmutter
- 12: Rohr
- 13: konische Innenfläche
- 14: Stirnflächenkante des Anschlußstückes 10

## Patentansprüche

1. Schraubverbindung mit einem Dichtungsring (1), einem Anschlußstück (10) und einer Überwurfmutter (11) zur Herstellung einer Rohrverbindung, wobei der Dichtungsring (1) als Schneidring (1) mit einer oder mehreren Schneiden (2, 3, 4) ausgebildet ist, welcher in eine von einer Stirnfläche (9) ausgehenden konischen Bohrung des Anschlußstückes (10) durch Aufschrauben der Überwurfmutter (11) auf das Anschlußstück (10) einbringbar ist, und der Dichtungsring (1) auf seiner Außenseite mutterseitig eine Ringverstärkung (5) aufweist, welche an ihrem Übergang vom schmalen Ringteil zum verstärkten Teil eine Ringfläche (6) bildet, die eine Neigung zur Rohrachse (7) zwischen 45° und 90° aufweist, **dadurch gekennzeichnet, daß** die axiale Länge L₁ der Ringverstärkung (5) derartig ausgebildet ist, daß auf der Ringfläche (6) angeordnete Übertragungselemente (8) bei korrekter Montage ihre negative Abbildung oder sich selbst auf die Stirnfläche (9) des Anschlußstückes (10) übertragen.

2. Schraubverbindung nach Anspruch 1, **dadurch gekennzeichnet, daß** die Übertragungselemente (8) räumlich ausgebildete Konturen aufweisen, deren negative Abbildung auf die Stirnfläche (9) des Anschlußstückes (10) übertragbar ist.

3. Schraubverbindung nach Anspruch 1 oder 2, **dadurch gekennzeichnet, daß** die Übertragungselemente (8) als Prägezeichen ausgebildet sind.

4. Schraubverbindung nach Anspruch 1, 2 oder 3, **dadurch gekennzeichnet, daß** die Übertragungselemente (8) geriffelt ausgebildet sind.

5. Schraubverbindung nach Anspruch 1, 2 oder 3, **dadurch gekennzeichnet, daß** die Übertragungselemente (8) als Firmenkennzeichen ausgebildet sind.

6. Schraubverbindung nach einem der voranstehenden Ansprüche, **dadurch gekennzeichnet, daß** die Übertragungselemente (8) Farbstoffpigmente aufweisen.

7. Schraubverbindung nach Oberbegriff von Anspruch 1, **dadurch gekennzeichnet, daß** die axiale Länge L₁ der Ringverstärkung (5) eine solche Größe aufweist, daß auf der Ringfläche (6) angeordnete Übertragungselemente (8) erst bei einer Übermontage ihre negative Abbildung oder sich selbst auf die Stirnfläche des Anschlußstückes übertragen.

## Claims

1. Screw joint with a sealing ring (1), a connecting piece (10) and a union nut (11) for making a tube connector, the sealing ring (1) being designed as a cutting ring (1) with one or several cutting edges (2, 3, 4) which can be inserted into a conical bore of the connecting piece (10) starting from an end face (9) by screwing the union nut (11) onto the connecting piece (10), and the sealing ring (1) being provided with an annular reinforcement (5) on the nut side of it's outside which forms a ring surface (6) at it's transition from the narrow ring portion to the annular reinforcement, the ring surface (6) having an inclination between 45° and 90° in relation to the longitudinal axis (7) of the tube connector, **characterised in that** the axial length L₁ of the annular reinforcement (5) is such that transfer elements (8) arranged on the ring surface (6) upon correct assembly transfer their negative image formation or themselves onto the end face (9) of the connecting piece (10).

2. Srew joint according to claim 1 **characterised in that** the transfer elements (8) have spatially designed contours whose negative image formation is transferable onto the end face (9) of the connecting piece (10).

3. Screw joint according to claim 1 or 2, **characterised in that** the transfer elements (8) are embossed patterns.

4. Screw joint according to claim 1, 2 or 3, **characterised in that** the transfer elements (8) are corrugated elements.

5. Screw joint according to claim 1, 2 or 3, **characterised in that** the transfer elements (8) are designed as company logos.

6. Screw joint according to one of the preceding claims, **characterised in that** the transfer elements (8) contain dye pigments.

7. Screw joint according to the preamble of claim 1, **characterised in that** the axial length L₁ of the annular reinforcement (5) is of a length such that transfer elements (8) arranged on the ring surface (6) transfer their negative image formation or themselves onto the end face of the connecting piece only in a case of overtightening.

## Revendications

1. Raccord à vis comprenant une bague d'étanchéité (1), un raccord (10) et un écrou raccord (11) pour la fabrication d'un assemblage de tuyau, la bague d'étanchéité (1) étant conçue comme bague coupante (1) avec une ou plusieurs lames (2, 3, 4), laquelle peut être introduite dans un alésage conique, partant d'une face avant (9), du raccord (10) par vissage de l'écrou raccord (11) sur le raccord (10), et la bague d'étanchéité (1) présentant sur son côté extérieur côté écrou un renfort annulaire (5) qui forme une surface annulaire (6) sur sa transition de la partie annulaire étroite à la partie renforcée, qui présente une inclinaison par rapport à l'axe du tuyau (7) comprise entre 45° et 90°, **caractérisé en ce que** la longueur L₁ axiale du renfort annulaire (5) est conçue de telle sorte que des éléments de transmission (8) disposés sur la surface annulaire (6) transmettent leur image négative dans le cas d'un montage correct ou se transmettent elles-mêmes à la face avant (9) du raccord (10).

2. Raccord à vis selon la revendication 1, **caractérisé en ce que** les éléments de transmission (8) présentent des contours conçus dans l'espace, dont l'image négative peut être transmise à la face avant (9) du raccord (10).

3. Raccord à vis selon la revendication 1 ou 2, **caractérisé en ce que** les éléments de transmission (8) sont conçus comme des caractères estampés.

4. Raccord à vis selon la revendication 1, 2 ou 3, **caractérisé en ce que** les éléments de transmission (8) sont conçus de façon cannelée.

5. Raccord à vis selon la revendication 1, 2 ou 3, **caractérisé en ce que** les éléments de transmission (8) sont conçus comme des marques de fabrique.

6. Raccord à vis selon l'une quelconque des revendications précédentes, **caractérisé en ce que** les éléments de transmission (8) présentent des pigments colorants.

7. Raccord à vis selon le préambule de la revendication 1, **caractérisé en ce que** la longueur L₁ axiale du renfort annulaire (5) présente une telle grandeur que les éléments de transmission (8) disposés sur la surface annulaire (6) transmettent leur image négative seulement lors d'un surmontage ou se transmettent elles-mêmes à la face avant du raccord.
